# EUROPEAN PATENT SPECIFICATION

(11) **EP 3 475 356 B1**
(45) Date of publication and mention of the grant of the patent: **16.11.2022**
(21) Application number: 17737227.3
(22) Date of filing: 27.06.2017
(51) Int. Cl.: C08K 3/22, C08K 3/36, C09D 175/08, C08G 18/32, C08G 18/48, C08G 18/66, C08G 18/76, C08G 18/30, C08G 18/36, C04B 26/16, C04B 28/02, C04B 111/60, C04B 24/28, C04B 111/00

(54) **THREE COMPONENT COMPOSITION FOR THE MANUFACTURE OF POLYURETHANE CEMENTITIOUS HYBRID FLOORING OR COATING WITH IMPROVED SURFACE GLOSS**
DREIKOMPONENTENZUSAMMENSETZUNG ZUR HERSTELLUNG VON ZEMENTARTIGEM POLYURETHANHYBRID-FUSSBODEN ODER BESCHICHTUNG MIT VERBESSERTEM OBERFLÄCHENGLANZ
COMPOSITION À TROIS COMPOSANTS POUR LA FABRICATION DE PLANCHER OU REVÊTEMENT DE SOL HYBRIDE CIMENTEUX À BASE DE POLYURÉTHANE OU AYANT UN BRILLANT DE SURFACE AMÉLIORÉ

(30) Priority: 27.06.2016 EP 16176492
(43) Date of publication of application: 01.05.2019
(73) Proprietor: Sika Technology AG, 6340 Baar (CH)
(72) Inventor: GIMENO SANTOS, Patricia, 70186 Stuttgart (DE); KADDATZ, Carola, 71570 Oppenweiler (DE); GRÖTZINGER, Jochen, 73525 Schwäbisch Gmünd (DE); GANTNER, Hans, 6710 Nenzing (AT)
(74) Representative: Sika Patent Attorneys
(86) International application number: PCT/EP2017/065833
(87) International publication number: WO 2018/002038

(56) References cited:
- EP-A1- 2 796 483
- WO-A1-2015/173214
- AU-B2- 426 554
- JP-A- 2015 214 451

## Description

### Technical field

The invention relates to a three component composition for the manufacture of polyurethane cementitious hybrid flooring or coating, a method for the manufacture of the flooring or coating with the three component composition and the flooring or coating obtainable by the method.

### Background of the invention

Cementitious flooring compositions are well known and widely used where smooth and chemically and mechanically resistant flooring solutions are required. In many such applications, epoxy resin based flooring compositions offer a suitable solution, also due to the fact that they often provide aesthetically pleasing and glossy surfaces. On the other hand, epoxy resin based flooring compositions suffer from certain disadvantages. For example, undesired blushing effects may occur, especially at lower temperatures. Also gloss intensity is often influenced by temperature and may decrease on cold environments. Furthermore, the chemicals involved (i.e. epoxides and amines) are increasingly considered hazardous by European Union Regulation REACH, so that an alternative chemistry to overcome such limitations is desirable. Polyurethane (PU) cementitious hybrid systems are known to offer an alternative solution for the preparation of coating and flooring products that have outstanding mechanical properties and do not suffer from the drawbacks associated with epoxy resin compositions. However, such PU hybrid systems generally exhibit dull or matt surfaces, which is an unfavorable restriction with respect to aesthetic demands, as the visual aspect of the surface of a coating or flooring is an important feature. Furthermore, dull or matt surfaces are sometimes difficult to clean, for gloss is often associated with surface smoothness. WO 2015/173214 A1 discloses cementitious three component compositions for making floorings and coatings of high gloss, the compositions comprising a polyol component, a polyisocyanate component and a hydraulic binder.

EP 2796483 A1, AU 426554 B2 and JP 2015 214451 A discloses cementitious three component compositions for making floorings and coatings with reduced blister formation.

Polyurethane cementitious hybrid systems are complex systems wherein during curing of the precursor components two main reactions occur, namely the reaction of a polyol and a polyisocyanate to form the polyurethane and the reaction of cement and water, generally called hydration. Upon hydration the cement is hardened to a solid material. The hydration is usually effected in the presence of aggregates such as sand or gravel so that the aggregate particles are bound together by the cement material to obtain mortar or concrete.

Since both reactions take place in the same mixture, it is almost unavoidable that unwanted side reactions occur. Specifically, the reactive isocyanate compounds can react with water resulting in the generation of amine compounds and CO₂ gas. The generation of CO₂ is a problem since it may lead to blister formation. Moreover, the formation of amines prompts a consecutive side reaction since the isocyanate compounds also react with amines to form urea compounds.

Due to the complex reactions and side reactions, it is difficult to modify the systems without affecting mechanical and workability characteristics and open time. In order to diminish unwanted side reactions and to maintain a sufficiently long shelf life, such PU cementitious hybrid systems use a three component composition, including basically a water/polyol component, a hardener (polyisocyanate) component, and a cement component. With such a three component setup it is possible to create stable compositions which yield smooth, mechanically and chemically resistant flooring surfaces after mixing and application. However, as mentioned before, they generally produce rather dull or matt surfaces which do not exhibit the appealing gloss of epoxy resin based compositions and are often difficult to clean.

### Summary of the invention

Therefore, the object of the present invention is to provide a composition for polyurethane cementitious hybrid systems which exhibit surfaces with improved gloss and smoothness and simultaneously have outstanding mechanical and workability properties. Furthermore, blister formation due to unwanted side reactions is to be avoided as much as possible.

Surprisingly, this object could be achieved by using a three component composition including a polyol component containing at least three polyols, one with high, one with low molecular weight and one with an average molecular weight of 300 to 3000 g/mol selected from the group consisting of polyoxyethylenepolyol, polyoxypropylenepolyol and polyoxybutylenepolyol, and water, a methylene diphenyl diisocyanate (MDI) product component containing either MDI with an average functionality of at least 2.5, or MDI with an average functionality of 2 which has been partially pre-polymerised with at least one further polyol, and a powder component. Moreover, further improved results can be achieved when the third polyol has an average molecular weight of 380 to 1500 g/mol and/or is contained in an amount of 2 to 4% by weight, based on the total weight of component (A).

Accordingly, the present invention relates to a three component composition consisting of a polyol component (A) comprising
a) - at least one polyol P1a with an average molecular weight of 800 to 30'000 g/mol, preferably 850 to 20'000 g/mol, more preferably 900 to 10'000 g/mol, whereby the polyol P1a is:
   a polyhydroxy-functional fat and/or a polyhydroxy-functional oil or a polyol obtained by chemical modification of natural fats and/or natural oils, and
   - at least one polyol **P1b** with an average molecular weight of 48 to 800 g/mol, preferably 60 to 600 g/mol, more preferably 60 to 400 g/mol, most preferably 60 to 300 g/mol, and
   - at least one polyol **P1c** with an average molecular weight of 300 to 3000 g/mol, preferably 350 to 2500 g/mol, more preferably 380 to 2200 g/mol, whereby the polyol **P1c** is selected from the group consisting of polyoxyethylenepolyol, polyoxypropylenepolyol and polyoxybutylenepolyol, preferably polyoxypropylenepolyol, and
   - water, and
b) a polyisocyanate component (B) comprising
   - a methylene diphenyl diisocyanate (MDI) product with an average NCO functionality of at least 2.5, or
   - a methylene diphenyl diisocyanate (MDI) product with an average NCO functionality of at least 2 and at least one polyol **P2** with an amount of between 1 and 30%, preferably between 5 and 25%, more preferably between 10 and 20% by weight, based on the weight of said polyisocyanate component (B), wherein said MDI product and said polyol **P2** have reacted at least partially, and
c) a powder component (C) comprising at least one hydraulic binder, preferably cement and/or calcined paper sludge.

The component (A) contains polyol **P1c** with an amount of 0.2 to 8%, preferably 0.5 to 7%, more preferably 0.8 to 6%, most preferably 2 to 4% by weight, based on the total weight of component (A).

The inventive three component composition can be used as self-levelling or self-smoothing screed or mortar and unexpectedly enables manufacture of polyurethane cementitious hybrid flooring systems exhibiting significantly improved gloss so that glossy/semiglossy surfaces can be achieved. Nevertheless, the characteristics as to workability, open time, mechanical properties such as compressive strength are outstanding. Moreover, blister formation can be avoided, which may positively affect the surface appearance.

Further benefits are moisture tolerance and fast curing within a period of one day or even less than 15 h for a wide range of temperatures, especially between 10 - 30°C, preferably between 10 - 15°C. A top sealer is not necessary so that complete application within one day is possible. Compressive strengths of e.g. 50 N/mm² after 28 d can be achieved. The finished products are easy to clean due to their smooth and glossy surface. Limitations imposed by REACH can be overcome and the system can be partly based on renewable raw materials such as castor oil and recycled waste materials such as calcined paper sludge.

The system of the invention is particularly suited as a polyurethane cementitious hybrid self-levelling screed with glossy/semiglossy surface in combination with heavy duty demands for flooring, especially industrial flooring.

### Detailed description of the invention

Substance names beginning with "poly", such as e.g. polyol or polyisocyanate, designate substances which formally contain, per molecule, two or more of the functional groups occurring in their names.

The term "open time" is understood to mean the duration of processability when the components are mixed with each other. The end of the open time is usually associated with viscosity increase of the composition such that processing of the composition is no longer possible.

The average molecular weight is understood to mean the number average molecular weight, as determined using conventional methods, preferably by gel permeation-chromatography (GPC) using polystyrene as standard (Mn), styrene-divinylbenzene gel with porosity of 100 Angstrom, 1000 Angstrom and 10000 Angstrom as the column and tetrahydrofuran as a solvent, at 35°C.

The compressive strength is determined according to EN 13892-2 (DIN EN 196-1) after 28d of curing at 23°C/50% relative humidity.

Gloss of the cured samples is determined by using a reflection meter according to EN ISO 2813 using angles of 20° and 60° respectively. The temperatures of the temperature-dependent gloss measurements, as well as the corresponding ambient relative humidity are given with the results, where appropriate.

The term average functionality in this document describes the average number of functional groups on a given molecule. For, e.g., a polyisocyanate, a functionality of 2 would describe a polyisocyanate molecule with in average 2 isocyanate groups per molecule.

The term workability encompasses many interrelated terms such as flowability, consistency, mobility, pumpability, plasticity, compactability, stability, and finishibility. These terms are usually of qualitative type. Herein, workability refers to flow/consistency which is determined at 23°C/50% relative humidity using the cone as described in DIN EN 1015-3, but without tamping the material. 1 kg of material (at 23°C/50% relative humidity) is used, 30 sec Component A; 1 min A+B 400 U/min, and 2 min, A+B+C to 700 U/min. The cone is set on the glass sheet, filled to the rim, lifted and the diameter of the resulting circle is determined after 5 min or 8 min respectively.

The composition of the invention consists of three individual components, which are stored separately in order to avoid spontaneous reaction, and are combined when a polyurethane cementitious hybrid flooring or coating is to be prepared. The components may be assembled together as a package. The three components are a polyol component (A), a polyisocyanate component (B) and a powder component (C) which are also simply referred to as component (A), component (B), and component (C), respectively, which are described in the following.

### Polyol component (A)

The polyol component (A) comprises at least one polyol P1a with an average molecular weight of 800 to 30'000 g/mol, preferably 850 to 20'000 g/mol, more preferably 900 to 10'000 g/mol, whereby the polyol P1a is a polyhydroxy-functional fat and/or a polyhydroxy-functional oil, preferably natural fats and/or oils, most preferred castor oil,
or
a polyol obtained by chemical modification of natural fats and/or natural oils, so-called oleochemical polyols.

Castor oil or a chemical modification thereof, especially Castor oil, is particularly preferred.

Examples of chemically modified natural fats and/or oils are polyols obtained from epoxypolyesters or epoxypolyethers obtained, for example, by epoxidation of unsaturated oils, by subsequent ring opening with carboxylic acids or alcohols, polyols obtained by hydroformylation and hydrogenation of unsaturated oils, or polyols which are obtained from natural fats and/or oils by degradation processes, such as alcoholysis or ozonolysis, and subsequent chemical linkage, for example by transesterification or dimerization, of the degradation products thus obtained or derivatives thereof. Also suitable are polyols obtained by polyoxyalkylation of natural oils, such as castor oil, for example available under the trade name Lupranol Balance^{®} by Elastogran GmbH, Germany. Suitable degradation products of natural fats and/or oils are in particular fatty acids and fatty alcohols and fatty acid esters, in particular the methyl esters (FAME), which can be derivatized, for example, by hydroformylation and hydrogenation to give hydroxy-fatty acid esters.

The polyols P1a mentioned above usually have a relatively high average molecular weight of between 800 and 30'000 g/mol, preferably between 850 and 20'000 g/mol, more preferably between 900 and 10'000 g/mol, and preferably an average OH functionality in the range from 1.6 to 3.

Examples of suitable polyols P1b are low molecular weight di- or polyhydric alcohols, with a molecular weight of 48 to 800 g/mol. Examples thereof are C2 to C12 alkyl diols, such as 1,2-ethanediol ((mono)ethylene glycol), 1,2- and 1,3-propanediol, neopentylglycol, diethylene glycol, triethylene glycol, the isomeric dipropylene glycols and tripropylene glycols, the isomeric butanediols (such as 1,2-, 1,3-, and 1,4-butandediol), pentanediols, hexanediols, heptanediols, octanediols, nonanediols, decanediols, undecanediols, 1,3- and 1,4-cyclohexanedimethanol, hydrogenated bisphenol A, dimeric fatty alcohols, 1,1,1-trimethylolethane, 1,1,1-trimethylolpropane, glycerol, pentaerythritol, sugar alcohols, such as xylitol, sorbitol or mannitol, sugars, such as sucrose, other alcohols having a higher functionality, low molecular weight alkoxylation products of the abovementioned di- and polyhydric alcohols, and mixtures thereof.

The polyols P1b mentioned above usually have a relatively low molecular weight, for instance, an average molecular weight of from 48 to 800 g/mol, preferably 60 to 600 g/mol, more preferably 60 to 400 g/mol, most preferably 60 to 300 g/mol.

It is advantageous if the polyols P1b have an average OH functionality of 1.6 to 6, preferably 2 to 5, more preferably 2 to 4.

Preferably, the polyol P1b is selected from C2 to C12 alkyl diols, glycerol, sugars, or oligomers thereof. Especially preferred polyols P1b are ethylene glycol or triethylene glycol.

The polyol component (A) further comprises at least one polyol P1c with an average molecular weight of 300 to 3000 g/mol, preferably 350 to 2500 g/mol, more preferably 380 to 2200 g/mol. The polyol P1c is selected from the group consisting of polyoxyethylenepolyol, polyoxypropylenepolyol and polyoxybutylenepolyol, preferably polyoxypropylenepolyol.

Preferably, the polyol **P1c** has an average OH functionality in the range of 1.6 to 6, preferably 1.8 to 4, more preferably 2 to 3, most preferred 2 to 2.2. This is advantageous for high values for surface gloss, long open time and higher values in workability/flow, especially if the average molecular weight of the polyol **P1c** is 380 to 600 g/mol.

It is further advantageous if the polyol **P1c** has an average molecular weight of 380 to 1500 g/mol, preferably 380 to 1200 g/mol, more preferably 380 to 600 g/mol. This is beneficial for high values for surface gloss (especially at 60°) and for longer open time.

It the polyol **P1c** has an average molecular weight of 800 to 3000 g/mol, preferably 1500 to 2500 g/mol, this is beneficial for higher values in workability/flow after 5 min.

It is further preferred if component (A) contains polyol **P1c** with an amount of 2 to 4% by weight, based on the total weight of component (A). This favours very high values for surface gloss at 60° and at the same time providing high values for surface gloss at 20°.

Preferably, the at least one polyol **P1b** and the at least one polyol **P1c** represent individual structurally different polyols.

In order to achieve the inventive improved gloss, preferably with values of 80 or more at 60°, at least one high molecular weight polyol P1a, at least one low molecular polyol P1b and at least one polyol P1c (with an amount of 0.2 to 8% by weight, based on the total weight of component (A)) are used in combination in polyol component (A).

In a preferred embodiment component (A) comprises said polyol P1a with an amount of 20 to 75%, preferably 25 to 70%, more preferably 30 to 60%, most preferably 35 to 50% by weight, based on the total weight of component (A), and said polyol P1b with an amount of 1 to 25%, preferably 2 to 20%, more preferably 3 to 15%, most preferably 3 to 10% by weight, based on the total weight of component (A). It is even more preferred if the component (A) further comprises polyol P1c with an amount of 0.2 to 8%, preferably 0.5 to 7%, more preferably 0.8 to 6%, most preferably 2 to 4% by weight, based on the total weight of component (A)

Component (A) furthermore comprises water, in a preferred embodiment with an amount of 20 to 40%, preferably 22 to 35%, more preferably 24 to 30% by weight, based on the total weight of component (A), and/or wherein the weight ratio of water to polyol P1b is in the range of 0.8 to 40, preferably 1.6 to 20, more preferably 2 to 6, and/or wherein the weight ratio of water in component (A) to hydraulic binder in component (C) is in the range of 0.1 to 0.7. Preferably all those conditions are met simultaneously.

It is further advantageous if component (A) contains less than 1%, especially less than 0.5%,preferably less than 0.2%, more preferably less than 0.1%, most preferably less than 0.05% by weight, based on the total weight of component (A), of a polyoxyethylenepolyol, polyoxypropylenepolyol or polyoxybutylenepolyol, especially polyoxypropylenepolyol, with an average molecular weight of more than 3 000 g/mol, preferably 3 500 to 10 000 g/mol, more preferably 3 500 to 5 500 g/mol. This is beneficial for high values of surface gloss and for higher values in workability/flow.

It is further advantageous if the weight ratio of polyol P1c to polyol P1a is in the range of (1:39.8) to (1:32), preferably (1:39.5) to (1:34), more preferably (1:39) to (1:35), even more preferably (1:38) to (1:36). This is advantageous for very high values for surface gloss at 60° and at the same time providing high values for surface gloss at 20°.

It is further advantageous if component (A) contains less than 1%, especially less than 0.5%, preferably less than 0.2%, more preferably less than 0.1%, most preferably less than 0.05% by weight, based on the total weight of component (A), of a poly(tetramethylene oxide) diol with an average molecular weight of 300 to 3000 g/mol, preferably 350 to 2500 g/mol, more preferably 380 to 2200 g/mol. Such a poly(tetramethylene oxide) diol typically consists of ≥ 90 wt.-%, in particular ≥ 95 wt.-%, of a polymerization product of tetrahydrofuran or a polycondensation product of 1,4-butanediol. Such poly(tetramethylene oxide) diols can for example be produced by polycondensation, in particular acid-catalyzed polycondensation, of 1,4-butanediol or by ring-opening polymerization of tetrahydrofuran.

This is beneficial for higher values of surface gloss and for longer open time.

Further, it is preferred if component (A) contains less than 1%, especially less than 0.5%,preferably less than 0.2%, more preferably less than 0.1%, most preferably less than 0.05% by weight, based on the total weight of component (A), of a polyesterpolyol, especially a polyesterdiol, with an average molecular weight of 300 to 3000 g/mol, preferably 350 to 2500 g/mol, more preferably 380 to 2200 g/mol. This is advantageous for higher values of surface gloss and for longer open time.

Apart from the one or more polyols and water, component (A) may contain further additives. Such additives are commonly used, if desired, and typically known to the persons skilled in the art of polyurethanes. Examples of optional additives are plasticizers, pigments, adhesion promoters, such as silanes, e.g. epoxysilanes, (meth)acrylatosilanes and alkylsilanes, stabilizers against heat, light, and UV radiation, thixotropic agents, flow improving additives, flame retardants, surface active agents such as defoamers, wetting agents, flow control agents, deaerating agents, biocides and emulsifiers.

Preferably used optional additives for component (A) are one or more plasticizers, such as benzoates (benzoate esters), benzyl phthalates, e.g. Santicizer^{®}160 (benzylbutyl phthalate), citric acid esters, e.g. Citrofol^{®}B II (acetyltributyl citrate), ethoxylated castor oil, stearates (perferably ethylene oxide modified), propyleneglycol laurates, and diisopropylbenzene, e.g. Benzoflex^{®}9-88.

In a preferred embodiment, component (A) comprises 10 to 30%, preferably 15 to 25% by weight of a plasticizer, based on the total weight of component (A).

Other suitable additives include pigments, such as inorganic and organic pigments, e.g. Bayferrox^{®} and Heucosin^{®}, defoamers, such as solvent silicon free and polyorganosiloxane, e.g. Tego^{®}Airex and Efka^{®}, and emulsifiers such as calcium hydroxide and calcium oxide.

While component (A) can be prepared without an emulsifier, the addition of an emulsifier may be suitable since the emulsifier increases stability of component (A) when the emulsion is prepared. A suitable emulsifier is calcium hydroxide. The content of the emulsifier, preferably calcium hydroxide, in component (A) may be up to 0.5% by weight, preferably in the range of 0.01 to 0.5% by weight based on the total weight of component (A).

### Polyisocyanate component (B)

The polyisocyanate component (B) comprises a methylene diphenyl diisocyanate (MDI) product with an average NCO functionality of at least 2.5, or a methylene diphenyl diisocyanate (MDI) product with an average NCO functionality of at least 2 and at least one polyol P2 with an amount of between 1% and 30%, preferably between 5% and 25%, more preferably between 10% and 20%, based on the weight of said polyisocyanate component (B), wherein said MDI product and said polyol have reacted at least partially.

In the following methylene diphenyl diisocyanate is abbreviated as "MDI" as usual. A plurality of different MDI product grades is available. MDI products can be classified into monomeric MDI (MMDI) also referred to as pure MDI and polymeric MDI (PMDI) also referred to as technical MDI. Such MDI products are commercially available. The MDI product is preferably monomeric MDI or polymeric MDI or a mixture of monomeric MDI and polymeric MDI.

There exists three isomers of MDI, namely 4,4'-methylene diphenyl diisocyanate (4,4'-MDI), 2,4'-methylene diphenyl diisocyanate (2,4'-MDI), and 2,2'-methylene diphenyl diisocyanate (2,2'-MDI).

It should be mentioned that polymeric MDI is a common designation for MDI products including a mixture of MDI isomers or a single isomer and oligomeric species as outlined above and explained in more detail below. The term "polymeric" in polymeric MDI does not necessarily mean that polymeric MDI contains common polymers of MDI.

Monomeric MDI or pure MDI is a MDI product of a single MDI isomer or isomer mixtures of two or three MDI isomers. The isomeric ratio of MDI isomers can vary in wide ranges. For instance, 4,4'-MDI is a colorless to yellowish solid having a melting point of 39.5°C. Commercial monomeric MDI is often a mixture of 4,4'-MDI, 2,4'-MDI and typically very low levels of 2,2'-MDI.

Polymeric MDI is an MDI product including oligomeric species in addition to MDI isomers. Thus, polymeric MDI contains a single MDI isomer or isomer mixtures of two or three MDI isomers, the balance being oligomeric species. Polymeric MDI tends to have isocyanate functionalities of higher than 2. The isomeric ratio as well as the amount of oligomeric species can vary in wide ranges in these products. For instance, polymeric MDI may typically contain about 30 to 80% by weight of MDI isomers, the balance being said oligomeric species. As in the case of monomeric MDI, the MDI isomers are often a mixture of 4,4'-MDI, 2,4'-MDI and very low levels of 2,2'-MDI. Polymeric MDI is typically a brown or dark amber liquid product at room temperature (23°C).

Surprisingly, higher average NCO functionality leads to glossier products when used according to the present invention. For the present invention, a NCO functionality of 2.5 or higher, preferably 2.7 or higher, is preferred. However, improved gloss effect can also be achieved with a lower average NCO functionality of at least 2, if at least one polyol P2 is added to or was present in the MDI component (B).

A wide variety of polymeric MDI grades is available with varying characteristics as to the number, type and content of isomers and oligomeric species, isomeric ratio, and weight distribution of the oligomeric homologues. These characteristics depend on type and conditions of synthesis and purification procedures. Moreover, the characteristics can be adjusted, e.g., by mixing different MDI product grades according to the needs of the customer.

MDI products including monomeric MDI and polymeric MDI are commercially available, e.g. Isonate^{®}, Papi^{®} and Voranate^{®} from Dow, Lupranat^{®} from BASF, Baytec^{®}Enc 88 or Baytec^{®}Enc 5003 from Bayer, or Suprasec^{®} from Huntsman. The MDI product may be momomeric MDI or polymeric MDI, wherein polymeric MDI is generally preferred. The total content of MDI isomers in polymeric MDI may vary. The polymeric MDI (PMDI) used may contain e.g. 55 to 65% by weight and preferably 35 to 45% by weight of MDI isomers (4,4'-MDI and optionally 2,4'-MDI and/or 2,2'-MDI), based on the total weight of the MDI product, the balance being said oligomeric species.

Apart from MDI product, component (B) may contain at least one polyurethane prepolymer which can be formed by adding at least one polyol P2, a molecule with one or more hydroxyl groups that are reactive with isocyanates, to the MDI product and leaving it react for a certain amount of time, preferably with elevated temperature. Suitable conditions include, e.g. 12 h at 40°C. The polyol is added in amounts of between 1% and 30%, preferably between 5% and 25%, more preferably between 10% and 20%, based on the total weight of component (B). This sub-stoichiometric addition leads to a partial reaction of the MDI product with the polyol, forming polyurethane-prepolymers.

Suitable polyols P2 are selected from polyhydroxy-functional polyoxyalkylene, polyhydroxy-functional polyester, polyhydroxy-functional polyoxyalkylated alcohol, or polyhydroxy-functional polyoxyalkylated natural oil. Preferred are polyoxyalkylenepolyols, also referred to as "polyetherpolyols", polyesterpolyols, polyoxyethylenediols, polyoxyethylenetriols, polyoxypropylenediols and polyoxypropylenetriols having an average molecular weight of from 400 to 8'000 g/mol. Especially preferred are blends of natural polyols such as castor oil with polyoxyalkylenpolyols, blends with keton resins, mixtures thereof, and the like.

Component (B) may optionally comprise in addition to the MDI product with an average NCO functionality of 2.5 or higher, or the MDI product with an average NCO functionality of 2 or higher and one or more polyols P2, one or more additives such as catalysts in relatively small amounts, e.g. less then 4% by weight, preferably less then 1% by weight, more preferably up to 0.05% by weight of additives altogether, based on the total of component (B). It is, however, generally preferred that component (B) consists essentially of the MDI product with an average functionality of > 2.5 or the reaction product of parts of the MDI product with an average functionality of > 2 with the added polyol P2, the MDI being preferably monomeric MDI or polymeric MDI or mixtures thereof, if at all including only small amounts of additives, e.g. less then 1% by weight, e.g. up to 0.05% by weight of additives altogether. However, since the MDI products are technical products, they may, of course, include low quantities of impurities.

### Powder component (C)

Component (C) is a powder comprising at least one hydraulic binder, preferably cement and/or calcined paper sludge.

In a preferred embodiment, cement is used as hydraulic binder. As cement, any conventional cement type or a mixture of two or more conventional cement types may be used, for example, cements classified according to DIN EN 197-1: Portland cement (CEM I), Portland composite cement (CEM II), blast furnace cement (CEM III), pozzolanic cement (CEM IV) and composite cement (CEM V). These main types are divided into 27 subtypes, known to those skilled in the art. Of course, cements produced in accordance with another standard, such as according to ASTM Standard or Indian Standard are also suitable.

Portland cement is the most common type of cement and appropriate for the present invention. A preferred type of cement is white cement, such a white cement I-52:5. or 42,5 R. White cement is a Portland cement with a low iron oxide content. It is similar to ordinary, gray Portland cement except for its high degree of whiteness.

Another preferred embodiment uses calcined paper sludge as hydraulic binder, alone or in combination with cement or other hydraulic binders. Paper sludge is a well-known waste product of paper production and in particular a waste product formed during de-inking of recycled paper. The latter paper sludge is also called deinked sludge or deinked paper sludge. Paper sludge originating from the deinking process of recycled paper is preferred.

Apart from cement and/or calcined paper sludge, also other hydraulic binders, such as fly ash or slag may be used in the present invention.

Component (C) preferably further comprises a calcium compound selected from calcium hydroxide and/or calcium oxide. Calcium hydroxide is also known as hydrated lime, calcium oxide is also known as burnt lime. Calcium hydroxide and calcium oxide can each be purchased as a white powder. The calcium compound selected from calcium hydroxide and/or calcium oxide may play an important role in the composition by controlling workability and by avoiding blister formation. It is generally preferred to use either calcium hydroxide or calcium oxide, but a mixture of calcium hydroxide and calcium oxide can also be used.

In addition, component (C) comprises in preferred embodiments one or more aggregates. Aggregates are chemically inert, solid particulate materials. Aggregates come in various shapes, sizes, and materials ranging from fine particles of sand to large, coarse rocks. Examples of suitable aggregates are sand, such as silica sand, gravel, and crushed stone, slag, calcined flint, lightweight aggregates as clay, bentonite, pumice, perlite, and vermiculite. Sand, in particular silica sand, is preferably used to reach the workability expected and to obtain a smooth surface.

The grain size of the aggregates is preferably rather small, e.g. less than 2 mm The aggregate may have, for instance, a grain size in the range of 0.06 to 2 mm, wherein sand, in particular silica sand, having a grain size in the range of 0.1 to 1 mm is particularly preferred. For instance, sand having a grain size ranging from 0.3 to 0.8 mm or from 0.1 to 0.5 mm can be advantageously used in the present invention. The grain size range can be determined, e.g. by sieve analysis.

The use of aggregates depends largely on the desired application. Especially for highly self-levelling products or very thin coating applications, omitting aggregates completely may be advantageous. The skilled artisan is able to adjust the type and amount of aggregates to the desired workability properties and end-use of the product.

Component (C) may optionally comprise one or more additives which are commonly used, if desired, and typically known to the persons skilled in the art of cement applications. Examples of suitable additives, which may be optionally used in component (C), are superplastizicers such as polycarboxylate ethers (PCE); mineral oil, fibres such as cellulose fibres, and inorganic or organic pigments.

### Suitable proportions for the three component composition

By adjusting the proportions of the ingredients within the components and between the components as well in a suitable manner, the improvements of the present invention can be significantly enhanced. Such suitable proportions are described in the following. The ingredients indicated refer to the ingredients in the particular component as discussed above. Ratios referring to ingredients in different components relate to suitable or correct proportions of each component according to operating instructions, i.e. to the mixing ratios to be used for mixing the three components and, in use to the mixture of the three components prepared.

The three component composition of the invention is in one preferred embodiment containing aggregates formulated such that the following proportions are satisfied:
a) the content of water is in the range of 3.5 to 5% by weight, preferably in the range of 4.1 to 4.6% by weight,
b) the content of MDI product is in the range of 15 to 18% by weight, preferably in the range of 16 to 17% by weight, and
c) the content of hydraulic binder is in the range of 16 to 20% by weight, preferably in the range of 17 to 18% by weight,
based on the total weight of component (A), component (B) and component (C).

In another preferred embodiment not containing aggregates such as sand, the three component composition of the invention is formulated such that the following proportions are satisfied:
a) the content of water is in the range of 5 to 15% by weight, preferably in the range of 9 to 11% by weight,
b) the content of MDI product is in the range of 30 to 50% by weight, preferably in the range of 35 to 45% by weight, and
c) the content of hydraulic binder is in the range of 25 to 45% by weight, preferably in the range of 30 to 40% by weight,
based on the total weight of component (A), component (B) and component (C).

Differences in the amount of water can influence not only the finished surface of the product but also the physical properties such as compression strength, workability and open time. Therefore, the proportion of water with respect to the other ingredients is to be determined carefully.

In the powder component, the calcium compound selected from calcium hydroxide (hydrated lime) and/or calcium oxide can play an important role, depending on the application. The presence of a calcium compound selected from calcium hydroxide and/or calcium oxide may efficiently prevent the formation of bubbles or blisters on the cured product's surface due to the formation of CO₂ by the reaction of the isocyanate compounds and water present in component (A). However, too high amounts may hinder the workability of the system. Calcium oxide upon hydration forms calcium hydroxide and thus serves the same purpose as the calcium hydroxide.

The content of the calcium compound selected from calcium hydroxide and/or calcium oxide may be, e.g., in the range of 1 to 4% by weight, preferably in the range of 3 to 3.5% by weight, based on the total weight of component (A), component (B) and component (C).

Moreover, the three component composition of the invention is preferably formulated such that at least one, preferably all, of the following weight ratios is satisfied:
a) the weight ratio of water to MDI product is in the range of 0.2 to 0.3 preferably in the range of 0.24 to 0.26,
b) the weight ratio of water to cement is in the range of 0.2 to 0.3, preferably in the range of 0.21 to 0.27, and/or
c) the weight ratio of hydraulic binder to MDI product is in the range of 0.8 to 1.6, preferably in the range of 0.9 to 1.4.

The weight ratio of water to the calcium compound selected from calcium hydroxide and/or calcium oxide in the three component composition is e.g. generally in the range of 1 to 4.5 and preferably in the range of 1.2 to 3.

The molar ratio of polyol hydroxyl groups in component (A) to MDI isocyanate groups in component (B) is preferably in the range of from 0.1 to 0.4. Said molar ratio further improves compressive strength of the finished product. The molar ratio can easily be determined via the equivalent weights of the polyols and polyisocyanates used.

The following proportions given for component (A) and for component (C) are preferred ranges, but it should be considered that these proportions depend to a considerable extent also on the mixing ratio of the three components to be used. Thus, the ranges indicated are particularly suitable for a mixing ratio by weight of components (A), (B) and (C) of about 16.5 : 16.5 : 67. Similar results may be achieved, when e.g. the proportion of component (C) in the mixing ratio is increased and the content of cement and calcium compound in component (C) is decreased at the same time. If aggregates are omitted in component (C), the total volume of component (C) may be considerably lower and a mixing ratio by weight of components (A), (B) and (C) of about 33.3 : 33.3 : 33.3 is easily possible, which may facilitate certain application processes.

Component (A) is preferably formulated such that the water content is in the range of 20 to 40% by weight, preferably 22 to 35% by weight, and in particular 24 to 30% by weight, and/or the content of polyol P1a is in the range of 20 to 75% by weight, preferably 25 to 70% by weight, more preferably 30 to 60% by weight, most preferably 35 to 50% by weight, the content of polyol P1b is in the range of 1 to 25% by weight, preferably 2 to 20% by weight, more preferably 3 to 15% by weight, most preferably 3 to 10% by weight, and the content of polyol P1c is in the range of 0.2 to 8%, preferably 0.5 to 7%, more preferably 0.8 to 6%, most preferably 2 to 4% by weight, each based on the total weight of component (A).

In one preferred embodiment, component (C) is formulated such that at least one, preferably all, of the following conditions is fulfilled, each based on the total weight of component (C):
a) the cement content is in the range of 20 to 30% by weight, preferably 25 to 29% by weight,
b) the content of calcium compound selected from calcium hydroxide and/or calcium oxide is in the range of 1 to 6% by weight, preferably 2 to 6% by weight, more preferably 4.5 to 5.5% by weight,
c) the aggregates content, preferably sand, is in the range of 65 to 80% by weight, preferably 68 to 70% by weight.

In another preferred embodiment, for instance suitable for thin layer top coat applications, component (C) is formulated such that at least one, preferably all, of the following conditions is fulfilled, each based on the total weight of component (C):
a) the cement content is in the range of 90 to 99% by weight, preferably 91 to 95% by weight,
b) the content of calcium compound selected from calcium hydroxide and/or calcium oxide is in the range of 1 to 6% by weight or 2 to 6% by weight, preferably 4.5 to 5.5% by weight.

In preferred embodiments, both component (A) and component (C) are formulated according to the proportions outlined above. Moreover, it is preferred that component (B) either consists essentially of the MDI product with average functionality of at least 2.5, or of a reaction product of the MDI product with average functionality of at least 2 and polyol P2, whereby it is most preferred that component (B) consists essentially of the MDI product with average functionality of at least 2.5.

As to the mixing ratio of components (A), (B) and (C), the weight ratio of component (A) to component (B) is preferably in the range of 0.7 to 1.4, and more preferably in the range of 0.9 to 1.2. The weight ratio of components (A+B) to component (C) is preferably in the range of 0.4 to 2.1, and more preferably in the range of 0.4 to 0.5 if component (C) contains aggregates such as sand, or more preferably in the range of 1.9 to 2.1, if component (C) does not contain aggregates such as sand, wherein components (A+B) represents the combined weight of component (A) and component (B). A particularly preferred mixing ratio by weight of components (A), (B) and (C) is about 16.5 : 16.5 : 67 if component (C) contains aggregates such as sand, or about 33.3 : 33.3 : 33.3 if component (C) does not contain aggregates such as sand. Said mixing ratios are particularly preferred, if components (A), (B) and (C) are formulated according to the proportions outlined above.

### Method for the manufacture of a polyurethane cementitious hybrid flooring or coating

The three component composition of the invention is suitable to prepare a polyurethane cementitious hybrid flooring or coating. The method comprises
a) mixing polyol component (A) and polyisocyanate component (B),
b) adding the powder component (C) to the mixture of polyol component (A) and polyisocyanate component (B) and mixing, to obtain a mixed material,
c) applying the mixed material to a substrate,
d) optionally smoothing the applied mixed material, and
e) curing the applied mixed material, to obtain the polyurethane cementitious hybrid flooring or coating.

A typical layer thickness e.g. ranges from 2 to 6 mm. The application temperature is preferably from about 10 to 30°C, especially preferred between 10 - 15°C. For these application temperatures, good improvements in gloss values can be achieved, especially at a humidity of 70%. Fast curing in less than 24 h for a wide range of temperatures can be achieved. Application of a top sealer is not required so that one day application is possible.

High compressive strengths can be achieved. The compressive strength of the flooring or coating obtained is preferably at least 45 N/mm², more preferably at least 48 N/mm², most preferred 50 to 55 N/m² after 28 days.

Three component compositions described herein are especially suitable as a self-levelling system or screed. The mixing and curing of such compositions as described herein according to the invention provides flooring and coating systems having a glossy/semiglossy surface of more than 50 GU, in preferred embodiments exhibiting gloss values of more than 60 GU, more preferably more than 70 GU, more preferably more than 80 GU, even more preferably more than 85 GU, especially preferably more than 90 GU, most preferably more than 95 GU based on the gloss measurement method according to EN ISO 2813, especially measured at 60°, and outstanding properties as to mechanical properties such as compressive strength, open time and workability. Further, the flooring and coating systems according to the present invention are able to maintain the values for Flexural strength after 28 days, Abrasion resistance after 7 days, Impact resistance after 7 days and Shore Hardness after 24 hours. The cured composition is preferably obtained by curing the composition at a curing temperature from 10°C to 35°C, preferably from 10°C to 30°C, and at a relative humidity from 20% to 70%.

The flooring or coating obtained by mixing and curing such a composition according to the present invention is an aspect of the present invention.

Another aspect of the present invention is the use of a three component composition as described herein as a polyurethane cementitious hybrid flooring or coating, wherein the cured composition exhibit a surface gloss of more than 50 GU, preferably more than 60 GU, more preferably more than 70 GU, more preferably more than 80 GU, even more preferably more than 85 GU, especially preferably more than 90 GU, most preferably more than 95 GU, based on the gloss measurement method according to EN ISO 2813, especially measured at 60°. The cured composition is preferably obtained by curing the composition at a curing temperature from 10°C to 35°C, preferably from 10°C to 30°C, and at a relative humidity from 20% to 70%.

A further aspect of the present invention is the use of a polyol **P1c** as described in detail further above, in a polyurethane cementitious hybrid flooring or coating, to increase the surface gloss of said three component composition, based on the gloss measurement method according to EN ISO 2813, especially measured at 60°. It is preferred that said polyurethane cementitious hybrid flooring or coating exhibits a surface gloss of more than 50 GU, preferably more than 60 GU, more preferably more than 70 GU, more preferably more than 80 GU, even more preferably more than 85 GU, especially preferably more than 90 GU, most preferably more than 95 GU, based on the gloss measurement method according to EN ISO 2813, especially measured at 60°.

The invention is further explained in the following experimental part which, however shall not be construed as limiting the scope of the invention. The proportions and percentage indicated are by weight, unless otherwise stated.

### Examples

### Reference Example

A reference composition for flooring applications was used or produced as follows.

### Reference composition R-1

Reference composition R-1 not according to the present invention is a three-component polyurethane cementitious hybrid flooring composition using a component (A) not according to the present invention (lacking polyol **P1c**). The composition of component (A), component (B) and component (C) are shown below.

The ingredients indicated below were mixed to form component (A), component (B) or component (C) respectively. The amounts given are in parts by mass.

| **Ingredient** | **Weight % based on weight of component (A)** |
|---|---|
| ***Component (A)*** | |
| Castor oil LV-117 (polyol P1a) | 40 |
| Ethylene glycol (polyol P1b) | 5 |
| Citrofol BII (plasticizer) | 17 |
| Tego Airex 944 (defoamer) | 1 |
| Dimethylaminoethanol/DMEA (amine catalyst) | 0.015 |
| Bayferrox (pigment) | 10 |
| Water | 27 |

| **Ingredient** | **Weight % based on weight of component (B)** |
|---|---|
| ***Component (B)*** | |
| Desmodur VKS 20 (MDI product with a functionality of 2.7), Bayer Material Science | 100 |

| **Ingredient** | **Weight % based on weight of component (C)** |
|---|---|
| ***Component (C)*** | |
| Silica sand 0.1 - 0.5 mm | 74 |
| White cement CEM 1 52,5 N | 25 |
| Calcium hydroxide (hydrated lime) | 1 |

### Composition mixture

Components (A), (B) and (C) are mixed in a weight ratio to obtain a mixture as indicated below, e.g. a weight ratio of about 16.5, 16.5 and 67, respectively, was used. The portion of each ingredient is given in % by weight, based on the total weight of the mixture A+B+C.

| | A+B+C (%) |
|---|---|
| Castor oil LV-117 (polyol P1a) | 6.7 |
| Ethylene glycol (polyol P1b) | 0.8 |
| Citrofol BII (plasticizer) | 2.8 |
| Tego Airex 944 (defoamer) | 0.2 |
| DMEA (amine catalyst) | 0.0025 |
| Bayferrox (pigment) | 1.7 |
| Water | 4.5 |
| MDI product | 16.7 |
| Silica sand, 0.1-0.5 mm | 49.3 |
| Calcium hydroxide | 0.7 |
| White cement CEM 1 52,5 N | 16.7 |

First, various polyols were added to the component (A) as polyol P1c. The compositions containing polyols and proper amount thereof according to the invention are labelled Ex.1- Ex.7 for inventive examples, compared to Ref.1 - Ref.17 which are reference examples. The amounts (weight % based on total weight of component (A)) are indicated in table 1. The same amount of polyol added was removed from the amount of castor oil (Castor oil LV-117 (polyol P1a)) in the reference composition R-1 described above which served as the basis for the compositions. For example, Ref. 1 (corresponding to R-1) contains 40 weight % of castor oil, based on the weight of component (A). Ex. 1 contains 39 weight % of castor oil, based on the total weight of component (A) and 1 weight % of Desmophen^{®} 2061 BD, based on the total weight of component (A).

The following polyols were used:

| Product name | Description |
|---|---|
| Acclaim 4200 | Linear polypropylenpolyetherpolyol, average OH-functionality=2, Mn: 4000 g/mol, Bayer Material Science AG |
| Voranol CP 4755 | Glycerine-propoxylated-ethoxylated polyether polyol, average OH-functionality =3, Mn: 4700 g/mol, Dow Plastics |
| Cerenol | 1,3-propanediol homopolymer polyether, average OH-functionality =2, Mn: 2000 g/mol, DuPont |
| Terathane 1000 | PolyTHF, average OH-functionality =2, Mn: 1000 g/mol, Invista |
| Desmophen 1111 BD | Linear polypropylenpolyetherpolyol, average OH-functionality =2, Mn: 1000 g/mol, Bayer MaterialScience AG |
| Desmophen 1381 BT | Trifunctional polyetherpolyol, average OH-functionality =3, Mn: 440 g/mol, Bayer Material Science AG |
| Capa 2043 | Linear polyester diol derived from caprolactone, average OH-functionality =2, Mn: 400 g/mol, OH-number 280 mg KOH/g, Perstorp Holding AB |
| Desmophen^{®} 1111 BD | Polyoxypropylen-Diol, OH-number 111.4 mg KOH/g, Mn: 1000 g/mol, Bayer MaterialScience AG |
| Desmophen^{®} 2061 BD | Polyoxypropylen-Diol, OH-number 56.1 mg KOH/g, Mn: 2000 g/mol, Bayer MaterialScience AG |

### Gloss measurements

Gloss was measured according to EN ISO 2813. Generally, measured values of > 70 GU (gloss units) are considered "high gloss", values between 20 and 70 GU "medium gloss", and values below 20 GU "matt", in accordance with EN ISO 2813. Normally, the samples are measured at an incident angle of 60°. However, very glossy samples are often measured at 20° for higher accuracy. All samples were prepared in film of 3 mm thickness after curing at 23°C and 50% rel. humidity during 24 h.

The results of the gloss measurements are presented in Table 1.

### Workability/flow measurements

Workability/flow was determined at 23°C/50% relative humidity using the cone as described in DIN EN 1015-3, but without tamping the material. 1 kg of material (at 23°C/50% relative humidity) is used, 30 sec Component A; 1 min A+B 400 U/min, and 2 min, A+B+C to 700 U/min. The cone is set on the glass sheet, filled to the rim, lifted and the diameter of the resulting circle is determined after 5 min or 8 min respectively.

The results of the workability/flow measurements are presented in Table 1.

### Open time

The open time was determined after having applied the freshly mixed material in films of 3 mm thickness (at 23°C/50% relative humidity) by pull a spatula with a thickness of 2 mm (immersion depth 2 mm) through the film. When the composition does not close the remaining mark any more, the end of the open time is reached. The measurement of the open time starts after mixing of the material.

The results of the open time measurements are presented in Table 1.

**Table 1, gloss values, workability/flow and open time of the tested polyols. "Blister" indicates that blister formation occurred.**

| **Nr.** | **Polyol used (P1c)** | **wt.-%** | **Angle 20° Gloss [GU]** | **Angle 60° Gloss [GU]** | **Flow** | **open time** |
|---|---|---|---|---|---|---|
| Ref.1 | none, R-1 only | | 26 | 64 | 5min: 306mm | 46min |
| | | | | | 8min: 343mm | |
| Ref.2 | Acclaim 4200 | 1 | 2 | 15 | | |
| Ref.3 | Acclaim 4200 | 3 | 6 | 36 | | |
| Ref.4 | Acclaim 4200 | 5 | 23 | 66 | 5min: 312mm | 34min |
| | | | | | 8min: 342mm | |
| Ref.5 | Acclaim 4200 | 10 | 26 | 69 | | |
| Ref.6 | Voranol CP 4755 | 5 | 1 | 11 | | |
| Ref.7 | Triethylenglycol | 5 | 9 | 43 | | |
| Ref.8 | Capa2043 | 1 | 10 | 44 | | |
| Ref.9 | Capa2043 | 3 | 29 | 68 | | |
| Ref.10 | Capa2043 | 5 | 24 | 67 | 5min 313mm | 44min |
| | | | | | 8min 344mm | |
| Ref.11 | Capa2043 | 10 | Blister 14 | Blister 50 | | |
| Ref.12 | Terathane 1000 | 1 | 17 | 54 | | |
| Ref.13 | Terathane 1000 | 3 | 27 | 63 | | |
| Ref.14 | Terathane 1000 | 5 | 28 | 61 | 5min: 321mm | 36min |
| | | | | | 8min: 359mm | |
| Ref.15 | Terathane 1000 | 10 | 32 | 65 | | |
| Ex.1 | Desmophen | 1 | 56 | 87 | | |
| | 2061 BD | | | | | |
| Ex.2 | Desmophen | 3 | 58 | 87 | | |
| | 2061 BD | | | | | |
| Ex.3 | Desmophen | 5 | 40 | 80 | 5min: 321mm | 34min |
| | 2061 BD | | | | 8min: 362mm | |
| Ref.16 | Desmophen 2061 BD | 10 | 41 | 79 | | |
| Ex.4 | Desmophen 1111 | 5 | 38 | 81 | 5min 321mm | 34min |
| | BD | | | | 8min 361mm | |
| Ex.5 | Desmophen 1381 BT | 1 | 83 | 95 | | |
| Ex.6 | Desmophen 1381 BT | 3 | 77 | 97 | | |
| Ex.7 | Desmophen 1381 | 5 | 59 | 95 | 5min: 314mm | 36min |
| | BT | | | | 8min: 349mm | |
| Ref.17 | Desmophen 1381 BT | 10 | Blister 1 | Blister 12 | | |

Further, the Reference composition R-1 as described above was compared to a composition according to the present invention consisting of Reference composition R-1 containing in the component (A) 5 weight-% of Desmophen 1111 BD and 35 weight-% of Castor oil LV-117 (instead of 40 weight-% of Castor oil LV-117 in the component (A) of R-1), both based on the total weight of component (A).

The following properties were determined:

### Mechanical properties and flow

The compressive strength was determined according to EN 13892-2 (DIN EN 196-1) after 28d of curing at 23°C/50% relative humidity.

The flexural strength was determined according to EN 13892-2 (DIN EN 196-1) after 28d of curing at 23°C/50% relative humidity.

The abrasion resistance g (Taber, H22) was determined according to EN ISO 5470-1 after 7d of curing at 23°C/50% relative humidity.

The impact resistance was determined according to EN ISO 6272-1 after 7d of curing at 23°C/50% relative humidity.

The Shore Hardness was determined according to EN ISO 868 after 24 hours of curing at 23°C/50% relative humidity.

The workability/flow was determined at 23°C/50% relative humidity as described before.

The results of the mechanical properties and flow values of reference composition Ref.18 and the inventive composition Ex. 8 are presented in Table 2.

**Table 2, mechanical properties and flow values**

| **Mechanical property and flow** | **Ref.18** | **Ex.8** |
|---|---|---|
| Compressive strength (28d) (N/mm2) | 52 | 52 |
| Flexural strength (28d) (N/mm2) | 18.5 | 18 |
| Abrasion resistance (7d) g (Taber, H22) | 0,5 | 0.5 |
| Impact resistance (7d) (Nm) | > 10 | > 10 |
| Shore Hardness (24 h) | 79 | 80 |
| Flow (23°C) mm, 8 min | 340 | 360 |

### Gloss measurements

Gloss was measured according to EN ISO 2813 as described before at an incident angle of 60°. All samples were prepared in film of 3 mm thickness after curing at the indicated temperature 23 °C and indicated percentages of relative humidity (% rel. humidity) during 24 h.

The results of the gloss measurements of reference composition Ref.18 and the inventive composition Ex. 8 and the changes in percent (comparing the gloss values of Ex. 8 with Ref. 18) are presented in Table 3.

**Table 3, Gloss values for different curing conditions**

| **Curing temperature (C°), humidity in %** | **Ref.18 Angle 60° Gloss [GU]** | **Ex.8 Angle 60° Gloss [GU]** | **Change (%)** |
|---|---|---|---|
| 10°C, 20% | 31 | 88 | 184 |
| 10°C, 50% | 30 | 52 | 73 |
| 10°C, 70% | 26 | 73 | 181 |
| 23°C, 20% | 69 | 75 | 9 |
| 23°C, 50% | 64 | 81 | 27 |
| 23°C, 70% | 40 | 84 | 110 |
| 28°C, 20% | 61 | 81 | 33 |
| 28°C, 50% | 65 | 78 | 20 |
| 28°C, 70% | 40 | 60 | 50 |
| 35°C, 20% | 65 | 64 | -2 |
| 35°C, 50% | 83 | 66 | -20 |
| 35°C, 70% | 64 | 41 | -36 |

## Claims

1. Three component composition consisting of
a) a polyol component (A) comprising
- at least one polyol **P1a** with an average molecular weight of 800 to 30'000 g/mol, whereby the polyol **P1a** is:
a polyhydroxy-functional fat and/or a polyhydroxy-functional oil or
a polyol obtained by chemical modification of natural fats and/or natural oils, and
- at least one polyol **P1b** with an average molecular weight of 48 to 800 g/mol, and
- at least one polyol **P1c** with an average molecular weight of 300 to 3000 g/mol, whereby the polyol **P1c** is selected from the group consisting of polyoxyethylenepolyol, polyoxypropylenepolyol and polyoxybutylenepolyol, preferably polyoxypropylenepolyol, and
- water, whereby the at least one polyol **P1b** and the at least one polyol **P1c** represent individual structurally different polyols, and
b) a polyisocyanate component (B) comprising
- a methylene diphenyl diisocyanate (MDI) product with an average NCO functionality of at least 2.5, or
- a methylene diphenyl diisocyanate (MDI) product with an average NCO functionality of at least 2 and at least one polyol **P2** with an amount of between 1 and 30%, based on the weight of said polyisocyanate component (B), wherein said MDI product and said polyol **P2** have reacted at least partially, and
c) a powder component (C) comprising at least one hydraulic binder, preferably cement and/or calcined paper sludge;
wherein component (A) contains said polyol **P1c** with an amount of 0.2 to 8%, based on the total weight of component (A).

2. Three component composition according to claim 1, wherein polyol **P1c** has an average OH functionality in the range of 1.6 to 6.

3. Three component composition according to claim 1 or 2, wherein polyol **P1c** has an average molecular weight of 380 to 1500 g/mol.

4. Three component composition according to any of claims 1 to 3, wherein component (A) contains less than 1% by weight, based on the total weight of component (A), of a polyoxyethylenepolyol, polyoxypropylenepolyol or polyoxybutylenepolyol, especially polyoxypropylenepolyol, with an average molecular weight of more than 3 000 g/mol.

5. Three component composition according any of claims 1 to 4, wherein the weight ratio of polyol P1c to polyol P1a is in the range of (1:39.8) to (1:32).

6. Three component composition according any of claims 1 to 5, wherein component (A) comprises said polyol **P1a** with an amount of 20 to 75% by weight, based on the total weight of component (A), and said polyol **P1b** with an amount of 1 to 25% by weight, based on the total weight of component (A).

7. Three component composition according to any of claims 1 to 6, wherein at least one polyol **P1b** of component (A) has an average OH functionality of 1.6 to 6.

8. Three component composition according to any of claims 1 to 7, wherein component (A) comprises water with an amount of 20 to 40% by weight, based on the total weight of component (A), and/or wherein the weight ratio of water to polyol **P1b** is in the range of 0.8 to 40 and/or wherein the weight ratio of water in component (A) to hydraulic binder in component (C) is in the range of 0.1 to 0.7.

9. Three component composition according to any of claims 1 to 8, wherein the weight ratio of component (A) to component (B) is in the range of 0.7 to 1.4, and/or wherein the weight ratio of components (A+B) to component (C) is in the range of 0.4 to 2.1, wherein components (A+B) represents the combined weight of component (A) and component (B).

10. Three component composition according to any of claims 1 to 9, wherein component (C) comprises
a) 70 to 97% by weight of at least one hydraulic binder, preferably cement and/or calcined paper sludge, and
b) 3% to 30% by weight of a calcium compound selected from calcium hydroxide and/or calcium oxide,
based on the total weight of component (C).

11. Three component composition according to any of claims 1 to 9, wherein component (C) comprises
a) 20 to 30% by weight of at least one hydraulic binder, preferably cement and/or calcined paper sludge,
b) 1% to 6% by weight of a calcium compound selected from calcium hydroxide and/or calcium oxide, and
c) 65 to 80% by weight of aggregates, preferably sand,
based on the total weight of component (C).

12. Method for the manufacture of a polyurethane cementitious hybrid flooring or coating with a three component composition according to any of claims 1 to 11, wherein the method comprises
a) mixing polyol component (A) and polyisocyanate component (B),
b) adding the powder component (C) to the mixture of polyol component (A) and polyisocyanate component (B) and mixing, to obtain a mixed material,
c) applying the mixed material to a substrate,
d) optionally smoothing the applied mixed material, and
e) curing the applied mixed material, to obtain the polyurethane cementitious hybrid flooring or coating.

13. Use of a three component composition according to any of claims 1 to 11 as a coating or flooring, wherein the cured composition exhibits a surface gloss of more than 50 GU, based on the gloss measurement method according to EN ISO 2813, whereby the cured composition is obtained by curing the composition at a curing temperature from 10°C to 35°C and at a relative humidity from 20% to 70%.

14. Use of a polyol **P1c** as described in any of claims 1 to 11 in a three component composition according to any of claims 1 to 11 to increase the surface gloss of said three component composition, based on the gloss measurement method according to EN ISO 2813.

## Patentansprüche

1. Dreikomponentige Zusammensetzung, bestehend aus
a) einer Polyolkomponente (A), umfassend
- mindestens ein Polyol **P1a** mit einem mittleren Molekulargewicht von 800 bis 30.000 g/mol, wobei es sich bei dem Polyol **P1a** um ein polyhydroxyfunktionelles Fett und/oder ein polyhydroxyfunktionelles Öl oder
ein durch chemische Modifizierung von natürlichen Fetten und/oder Ölen erhaltenes Polyol
handelt, und
- mindestens ein Polyol **Plb** mit einem mittleren Molekulargewicht von 48 bis 800 g/mol und
- mindestens ein Polyol **P1c** mit einem mittleren Molekulargewicht von 300 bis 3000 g/mol, wobei das Polyol **P1c** aus der Gruppe bestehend aus Polyoxyethylenpolyol, Polyoxypropylenpolyol und Polyoxybutylenpolyol, vorzugsweise Polyoxypropylenpolyol, ausgewählt ist, und
- Wasser, wobei das mindestens eine Polyol **Plb** und das mindestens eine Polyol **P1c** individuelle strukturell verschiedene Polyole darstellen, und
b) einer Polyisocyanatkomponente (B), umfassend
- ein Methylendiphenylisocyanat(MDI)-Produkt mit einer mittleren NCO-Funktionalität von mindestens 2,5 oder
- ein Methylendiphenylisocyanat(MDI)-Produkt mit einer mittleren NCO-Funktionalität von mindestens 2 und mindestens ein Polyol **P2** in einer Menge zwischen 1 und 30 Gew.-%, bezogen auf das Gewicht der Polyisocyanatkomponente (B), wobei das MDI-Produkt und das Polyol **P2** zumindest teilweise reagiert haben, und
c) eine Pulverkomponente (C), umfassend mindestens ein hydraulisches Bindemittel, vorzugsweise Zement und/oder calcinierten Papierschlamm,
wobei Komponente (A) das Polyol **P1c** in einer Menge von 0,2 bis 8 Gew.-%, bezogen auf das Gesamtgewicht von Komponente (A), umfasst.

2. Dreikomponentige Zusammensetzung nach Anspruch 1, wobei Polyol **P1c** eine mittlere OH-Funktionalität im Bereich von 1,6 bis 6 aufweist.

3. Dreikomponentige Zusammensetzung nach Anspruch 1 oder 2, wobei Polyol **P1c** ein mittleres Molekulargewicht von 380 bis 1500 g/mol aufweist.

4. Dreikomponentige Zusammensetzung nach einem der Ansprüche 1 bis 3, wobei Komponente (A) weniger als 1 Gew.-%, bezogen auf das Gesamtgewicht von Komponente (A), eines Polyoxyethylenpolyols, Polyoxypropylenpolyols oder Polyoxybutylenpolyols, vorzugsweise Polyoxypropylenpolyols, mit einem mittleren Molekulargewicht von mehr als 3000 g/mol umfasst.

5. Dreikomponentige Zusammensetzung nach einem der Ansprüche 1 bis 4, wobei das Gewichtsverhältnis von Polyol P1c zu Polyol P1a im Bereich von (1:39,8) bis (1:32) liegt.

6. Dreikomponentige Zusammensetzung nach einem der Ansprüche 1 bis 5, wobei Komponente (A) das Polyol **P1a** in einer Menge von 20 bis 75 Gew.-%, bezogen auf das Gesamtgewicht der Komponente (A), und das Polyol **Plb** in einer Menge von 1 bis 25 Gew.-%, bezogen auf das Gesamtgewicht der Komponente (A), umfasst.

7. Dreikomponentige Zusammensetzung nach einem der Ansprüche 1 bis 6, wobei das mindestens eine Polyol **Plb** von Komponente (A) eine mittlere OH-Funktionalität von 1,6 bis 6 aufweist.

8. Dreikomponentige Zusammensetzung nach einem der Ansprüche 1 bis 7, wobei Komponente (A) Wasser in einer Menge von 20 bis 40 Gew.-%, bezogen auf das Gesamtgewicht der Komponente (A), umfasst und/oder wobei das Gewichtsverhältnis von Wasser zu Polyol **Plb** im Bereich von 0,8 bis 40 liegt und/oder wobei das Gewichtsverhältnis von Wasser in Komponente (A) zu hydraulischem Bindemittel in Komponente (C) im Bereich von 0,1 bis 0,7 liegt.

9. Dreikomponentige Zusammensetzung nach einem der Ansprüche 1 bis 8, wobei das Gewichtsverhältnis von Komponente (A) zu Komponente (B) im Bereich von 0,7 bis 1,4 liegt und/oder wobei das Gewichtsverhältnis von Komponenten (A+B) zu Komponente (C) im Bereich von 0,4 bis 2,1 liegt, wobei Komponenten (A+B) für das kombinierte Gewicht von Komponente (A) und Komponente (B) stehen.

10. Dreikomponentige Zusammensetzung nach einem der Ansprüche 1 bis 9, wobei Komponente (C)
a) 70 bis 97 Gew.-% mindestens eines hydraulischen Bindemittels, vorzugsweise Zement und/oder calcinierten Papierschlamm, und
b) 3 bis 30 Gew.-% einer Calciumverbindung, die aus Calciumhydroxid und/oder Calciumoxid ausgewählt ist,
bezogen auf das Gesamtgewicht von Komponente (C), umfasst.

11. Dreikomponentige Zusammensetzung nach einem der Ansprüche 1 bis 9, wobei Komponente (C)
a) 20 bis 30 Gew.-% mindestens eines hydraulischen Bindemittels, vorzugsweise Zement und/oder calcinierten Papierschlamm,
b) 1 bis 6 Gew.-% einer Calciumverbindung, die aus Calciumhydroxid und/oder Calciumoxid ausgewählt ist, und
c) 65 bis 80 Gew.-% Zuschläge, vorzugsweise Sand, bezogen auf das Gesamtgewicht von Komponente (C), umfasst.

12. Verfahren zur Herstellung eines Polyurethan-Zement-Bodenbelags oder -Überzugs mit einer dreikomponentigen Zusammensetzung nach einem der Ansprüche 1 bis 11, wobei das Verfahren Folgendes umfasst:
a) Mischen von Polyolkomponente (A) und Polyisocyanatkomponente (B),
b) Zugeben der Pulverkomponente (C) zu der Mischung von Polyolkomponente (A) und Polyisocyanatkomponente (B) und Mischen zum Erhalt eines gemischten Materials,
c) Aufbringen des gemischten Materials auf ein Substrat,
d) gegebenenfalls Glätten des aufgebrachten gemischten Materials und
e) Härten des aufgebrachten gemischten Materials zum Erhalt des Polyurethan-Zement-Bodenbelags oder -Überzugs.

13. Verwendung einer dreikomponentigen Zusammensetzung nach einem der Ansprüche 1 bis 11 als Überzug oder Bodenbelag, wobei die gehärtete Zusammensetzung einen Oberflächenglanz von mehr als 50 GU, basierend auf der Glanzmessmethode gemäß EN ISO 2813, aufweist, wobei die gehärtete Zusammensetzung durch Härten der Zusammensetzung bei einer Härtungstemperatur von 10 °C bis 35 °C und bei einer relativen Feuchtigkeit von 20 % bis 70 % erhalten wird.

14. Verwendung eines Polyols **P1c** gemäß einem der Ansprüche 1 bis 11 in einer dreikomponentigen Zusammensetzung nach einem der Ansprüche 1 bis 11 zur Erhöhung des Oberflächenglanzes der dreikomponentigen Zusammensetzung, basierend auf der Glanzmessmethode gemäß EN ISO 2813.

## Revendications

1. Composition à trois composants constituée de
a) un composant polyol (A) comprenant
- au moins un polyol **P1a** ayant une masse moléculaire moyenne de 800 à 30 000 g/mol, le polyol **P1a** étant :
une matière grasse à fonction polyhydroxy et/ou une huile à fonction polyhydroxy ou
un polyol obtenu par modification chimique de matières grasses naturelles et/ou d'huiles naturelles, et
- au moins un polyol **Plb** ayant une masse moléculaire moyenne de 48 à 800 g/mol et
- au moins un polyol **P1c** ayant une masse moléculaire moyenne de 300 à 3000 g/mol, le polyol **P1c** étant choisi dans le groupe constitué par un polyoxyéthylènepolyol, un polyoxypropylènepolyol et un polyoxybutylènepolyol, de préférence un polyoxypropylènepolyol, et
- de l'eau,
l'au moins un polyol **Plb** et l'au moins un polyol **P1c** représentant des polyols individuels de structure différente, et
b) un composant polyisocyanate (B) comprenant
- un produit de diisocyanate de diphénylméthylène (MDI) ayant une fonctionnalité NCO moyenne d'au moins 2,5 ou
- un produit de diisocyanate de diphénylméthylène (MDI) ayant une fonctionnalité NCO moyenne d'au moins 2 et au moins un polyol **P2** en une quantité comprise entre 1 et 30 %, par rapport au poids dudit composant polyisocyanate (B), ledit produit de MDI et ledit polyol **P2** ayant réagi au moins partiellement, et
c) un composant en poudre (C) comprenant au moins un liant hydraulique, de préférence du ciment et/ou de la boue de papier calcinée ;
dans laquelle le composant (A) contient ledit polyol **P1c** en une quantité de 0,2 à 8 %, par rapport au poids total de composant (A).

2. Composition à trois composants selon la revendication 1, dans laquelle le polyol **P1c** a une fonctionnalité OH moyenne dans la plage de 1,6 à 6.

3. Composition à trois composants selon la revendication 1 ou 2, dans laquelle le polyol **P1c** a une masse moléculaire moyenne de 380 à 1500 g/mol.

4. Composition à trois composants selon l'une quelconque des revendications 1 à 3, dans laquelle le composant (A) contient moins de 1 % en poids, par rapport au poids total de composant (A), d'un polyoxyéthylènepolyol, d'un polyoxypropylènepolyol ou d'un polyoxybutylènepolyol, en particulier d'un polyoxypropylènepolyol, ayant une masse moléculaire moyenne supérieure à 3 000 g/mol.

5. Composition à trois composants selon l'une quelconque des revendications 1 à 4, dans laquelle le rapport pondéral du polyol P1c au polyol P1a est dans la plage de (1:39,8) à (1:32).

6. Composition à trois composants selon l'une quelconque des revendications 1 à 5, dans laquelle le composant (A) comprend ledit polyol **P1a** en une quantité de 20 à 75 % en poids, par rapport au poids total de composant (A), et ledit polyol **Plb** en une quantité de 1 à 25 % en poids, par rapport au poids total de composant (A) .

7. Composition à trois composants selon l'une quelconque des revendications 1 à 6, dans laquelle au moins un polyol **Plb** du composant (A) a une fonctionnalité OH moyenne de 1,6 à 6.

8. Composition à trois composants selon l'une quelconque des revendications 1 à 7, dans laquelle le composant (A) comprend de l'eau en une quantité de 20 à 40 % en poids, par rapport au poids total de composant (A), et/ou dans laquelle le rapport pondéral de l'eau au polyol **Plb** est dans la plage de 0,8 à 40 et/ou dans laquelle le rapport pondéral de l'eau présente dans le composant (A) au liant hydraulique présent dans le composant (C) est dans la plage de 0,1 à 0,7.

9. Composition à trois composants selon l'une quelconque des revendications 1 à 8, dans laquelle le rapport pondéral du composant (A) au composant (B) est dans la plage de 0,7 à 1,4 et/ou dans laquelle le rapport pondéral des composants (A + B) au composant (C) est dans la plage de 0,4 à 2,1, les composants (A + B) représentant le poids combiné de composant (A) et de composant (B).

10. Composition à trois composants selon l'une quelconque des revendications 1 à 9, dans laquelle le composant (C) comprend
a) 70 à 97 % en poids d'au moins un liant hydraulique, de préférence de ciment et/ou de boue de papier calcinée, et
b) 3 % à 30 % en poids d'un composé du calcium choisi entre l'hydroxyde de calcium et/ou l'oxyde de calcium,
par rapport au poids total de composant (C).

11. Composition à trois composants selon l'une quelconque des revendications 1 à 9, dans laquelle le composant (C) comprend
a) 20 à 30 % en poids d'au moins un liant hydraulique, de préférence de ciment et/ou de boue de papier calcinée,
b) 1 % à 6 % en poids d'un composé du calcium choisi entre l'hydroxyde de calcium et/ou l'oxyde de calcium et
c) 65 à 80 % en poids de granulats, de préférence de sable,
par rapport au poids total de composant (C).

12. Procédé pour la fabrication d'un revêtement ou revêtement de sol hybride de polyuréthane et de ciment avec une composition à trois composants selon l'une quelconque des revendications 1 à 11, le procédé comprenant
a) le mélange de composant polyol (A) et de composant polyisocyanate (B),
b) l'ajout du composant en poudre (C) au mélange de composant polyol (A) et de composant polyisocyanate (B) et le mélange, pour obtenir une matière mélangée,
c) l'application de la matière mélangée sur un substrat,
d) éventuellement le lissage de la matière mélangée appliquée et
e) le durcissement de la matière mélangée appliquée, pour obtenir le revêtement ou revêtement de sol hybride de polyuréthane et de ciment.

13. Utilisation d'une composition à trois composants selon l'une quelconque des revendications 1 à 11 en tant que revêtement ou revêtement de sol, la composition durcie présentant une brillance de surface supérieure à 50 GU, sur la base de la méthode de mesure de brillance selon la norme EN ISO 2813, la composition durcie étant obtenue par durcissement de la composition à une température de durcissement allant de 10 °C à 35 °C et à une humidité relative allant de 20 % à 70 %.

14. Utilisation d'un polyol **P1c** tel que décrit dans l'une quelconque des revendications 1 à 11 dans une composition à trois composants selon l'une quelconque des revendications 1 à 11 pour augmenter la brillance de surface de ladite composition à trois composants, sur la base de la méthode de mesure de brillance selon la norme EN ISO 2813.
